Europäisches Patentamt

European Patent Office

Office européen des brevets

(19)

(11) **EP 1 306 755 A1**

(12) **EUROPÄISCHE PATENTANMELDUNG**

(43) Veröffentlichungstag:
   **02.05.2003 Patentblatt 2003/18**

(51) Int Cl.[7]: **G06F 9/445**, H04Q 7/32

(21) Anmeldenummer: **01125772.2**

(22) Anmeldetag: **29.10.2001**

(84) Benannte Vertragsstaaten:
   **AT BE CH CY DE DK ES FI FR GB GR IE IT LI LU
   MC NL PT SE TR**
   Benannte Erstreckungsstaaten:
   **AL LT LV MK RO SI**

(71) Anmelder: **Siemens Schweiz AG**
   **8047 Zürich (CH)**

(72) Erfinder:
   • **Schweizer, Walter**
    **8047 Zürich (CH)**
   • **Sigg, Urs**
    **8006 Zürich (CH)**

(74) Vertreter: **Fischer, Michael, Dr.**
   **Siemens AG,**
   **Postfach 22 16 34**
   **80506 München (DE)**

(54) **Verfahren zur Versorgung eines Gerätes mit Software**

(57)   Bei der Versorgung eines Gerätes (1) oder eines Systems mit Software-Modulen (image_tmp, image_res) ist sicherzustellen, dass nur solche Software-Module zum Gerät (1) übertragen und installiert werden, die zum Gerät (1) und zu im Gerät (1) bereits installierten Software-Modulen (image_res) kompatibel sind. Da die zu übertragenden Software-Module (image_tmp) ein wirtschaftliches Gut darstellen, sollten Dritte davon ausgeschlossen werden, sich bei der Uebertragung (20) an solchen Software-Modulen (image_tmp) bedienen zu können. Diese Aufgabe wird dadurch gelöst, dass von einem mit neuen Software-Modulen (image_tmp) zu versorgenden Gerät (1) differenzierte Angaben über z.B. Typ, Ausbaustand und Herkunft des Gerätes (1) wie auch bereits installierter Software-Module (image_res) über ein Netzwerk (5) zu einem Server (4) übertragen werden. Im Server (4) wird aufgrund der übermittelten Angaben eine Berechtigung geprüft, ob das betreffende Gerät (1) mit neuen Software-Modulen versorgt werden darf. Die Uebermittlung (20) der Daten erfolgt dabei über eine verschlüsselte Verbindung.

Fig. 2

EP 1 306 755 A1

**Beschreibung**

Die vorliegende Erfindung betrifft ein Verfahren zur Versorgung eines Gerätes mit Software und ein System zur Durchführung des vorgenannten Verfahrens nach dem Oberbegriff der Patentansprüche 1 bzw. 8.

Tragbare Informations- und Datenverarbeitungsgeräte - oft als sogenannte PDA's (Personal Digital Assistant) bezeichnet - verfügen über eine hohe Funktionalität. Diese wird über die in einem solchen Geräte gespeicherten Programme erreicht. Bei Personalcomputern kann eine Neuinstallation der Software mittels eines Datenträgers, wie z.B. einer Compact Disk CD, vorgenommen werden. Eine Anpassung von z.B. Treiberprogrammen erfolgt vielfach mit einem sogenannten Download über ein Netzwerk erfolgt. Die vorerwähnten Verfahren können zur Versorgung eines PDA's mit Software deshalb nicht angewendet werden, da in diesen Geräten aufgrund ihrer Dimension ein sogenanntes CD-ROM-Laufwerk nicht untergebracht werden kann. Es ist möglich, ein Treiberprogramm über ein Netzwerk herunterzuladen (Download), es besteht jedoch die Gefahr, dass ein zum installierten Betriebssystem oder Anwendungsprogramm inkompatibler Treiber im betreffenden Gerät installiert wird. Dadurch kann das Gerät für den weiteren Gebrauch blockiert werden. Da der Anwender selber keine Neuinstallation vornehmen kann, muss das Gerät einer Service-Stelle gebracht werden und Betriebssystem und Anwendungsprogramme neu in den Lesespeicher installiert werden. Selbst wenn es möglich wäre, für solche Geräte einen Massenspeicher für die Versorgung mit neuer Software auf kostengünstige Weise bereitzustellen, hat ein Download eines neuen Software-Moduls über ein Netzwerk grosse Vorteile hinsichtlich der Verteilungslogistik. Problematisch bleibt auch bei dieser Lösung die Kompatibilität sowie die Feststellung einer Berechtigung, ob das betreffende Gerät aus Sicht eines Netzwerkbetreibers (carrier) geladen werden soll, da damit eine möglichst entgeltliche Versorgung erreicht werden soll.

In der Schrift EP 1 133 088 A1 ist ein Verfahren zur Versorgung von Videotaperecodern mit TV-Programminformation offenbart, die über eine Funkstrecke zu den Videotaperecordern übermittelt wird. Dabei kann vom Benutzer aus über ein Mobiltelefon gesteuert werden, ob er das betreffende Programm unter Leistung einer allfälligen Gebühr anschauen oder aufzeichnen lassen will. Nur über einen individuellen Schlüssel können die berechtigten Benutzer ein solches im Broadcastverfahren übermitteltes Programm auch tatsächlich aufzeichnen oder ansehen lassen.

Das in EP 1 133 088 A1 offenbarte Verfahren kann für PDA's zur Versorgung mit Software deshalb nicht angewendet werden, weil die Verwendung von zwei Geräten nicht handhabbar ist.

Der vorliegenden Erfindung liegt daher die Aufgabe zugrunde, ein Verfahren zur Versorgung eines Gerätes mit Software-Modulen und ein zugehöriges System zur Durchführung des vorgenannten Verfahrens anzugeben, bei dem sichergestellt ist, dass nur solche Software-Module zum Gerät übertragen und installiert werden, die zum Gerät und zu im Gerät bereits installierten Software-Modulen kompatibel sind und dass sich Dritte an der Uebertragung der Software-Module nicht beteiligen können.

Diese Aufgabe wird durch die im Patentanspruch 1 bzw. 8 angegebenen Massnahmen gelöst. Vorteilhafte Ausgestaltungen der Erfindung sind in weiteren Ansprüchen angegeben.

Durch die erfindungsgemässen Verfahrensschritte

A eine wenigstens das Gerät identifizierende Kennung wird vom Gerät an den Server übermittelt;

B Im Server wird geprüft, ob zur übermittelten Kennung ein korrespondierendes Software-Modul vorhanden ist und ob für die Kennung eine Berechtigung vorhanden ist, ein Software-Modul zu übermitteln;

C abhängig vom Ergebnis der Prüfung im Verfahrensschritt B wird entweder das korrespondierende Software-Modul oder eine Meldung übermittelt und im Speicher des Gerätes gespeichert, wobei die Uebermittlung in den Verfahrensschritten A und C verschlüsselt ist;

wird sichergestellt, dass nur kompatible Software-Module zum Gerät oder zu bereits installierten Software-Modulen übermittelt werden und durch die verschlüsselte Uebertragung können sich Dritte an den zu transferierenden Software-Modulen nicht bedienen.

So können sich die folgenden Vorteile zusätzlich ergeben:

i) Dadurch dass die im Verfahrensschritt A übermittelte Kennung Angaben enthält über das Gerät:

- Ausbau des Gerätes;
- Herkunft des Gerätes;

und/oder über die auf dem Gerät installiertes Software-Module:

- auf dem Gerät installierte Sprache;
- Herkunft und/oder Laufnummer eines momentan auf dem Gerät installiertes Software-Moduls;

kann auf eine sehr differenzierte Weise die Kompatibilität von neuen Software-Modulen zum Gerät und/oder zu bereits installierten Software-Modulen sichergestellt werden (Patentanspruch 2).

ii) Dadurch dass im Verfahrensschritt C die gesicherte Uebertragung mittels des Protokolls https erfolgt; kann das erfindungsgemässe Verfahren mit einer standardisierten Verschlüsselung auf einfache Weise implementiert werden (Patentanspruch 5).

iii) Dadurch dass die Verfahrensschritte A und B sooft iteriert werden, bis alle Informationen zur Ausführung des Verfahrensschrittes C vorhanden sind; kann ein vorzeitiger Abbruch einer Interaktion Benutzer/Server oder eine vorzeitige Negierung einer Berechtigung vermieden werden und erhöht dadurch die Benutzerfreundlichkeit ganz beträchtlich (Patentanspruch 6).

Mit dem Begriff Programme bzw. Software sind im Kontext der vorliegenden Erfindung Betriebssystem und Anwendungsprogramme wie auch dazu vorgegebene Datenbanken und Datenbankstrukturen subsummiert. Es dürfen daher nur dazu kompatible Software-Module hinzugefügt werden. In einem Software-Modul kann eine Bibliothek, z.B. eine Direct Link Library (DLL), ein ausführbarer Programmteil wie auch eine bestimmte Datei mit vorgegebener Struktur, z.B. ein Default Registry, enthalten sein. Im Kontext mit der Beschreibung dieser Erfindung werden die vorstehend genannten inhaltlich durchaus verschiedenen Komponenten unter dem Begriff "Software-Modul" subsummiert.

Die Erfindung wird nachfolgend anhand der Zeichnung beispielsweise näher erläutert. Dabei zeigen:

Figur 1    Eine Uebersicht von Geräten, die über ein Netzwerk mit einem Server verbindbar sind;
Figur 2    Speicheraufteilung in einem Gerät zur Erläuterung der einzelnen Verfahrensschritte zur Vorsorgung eines Gerätes mit Software-Modulen;
Figur 3    Darstellung des Kommunikationsablaufes zwischen einem Gerät und einem Server.

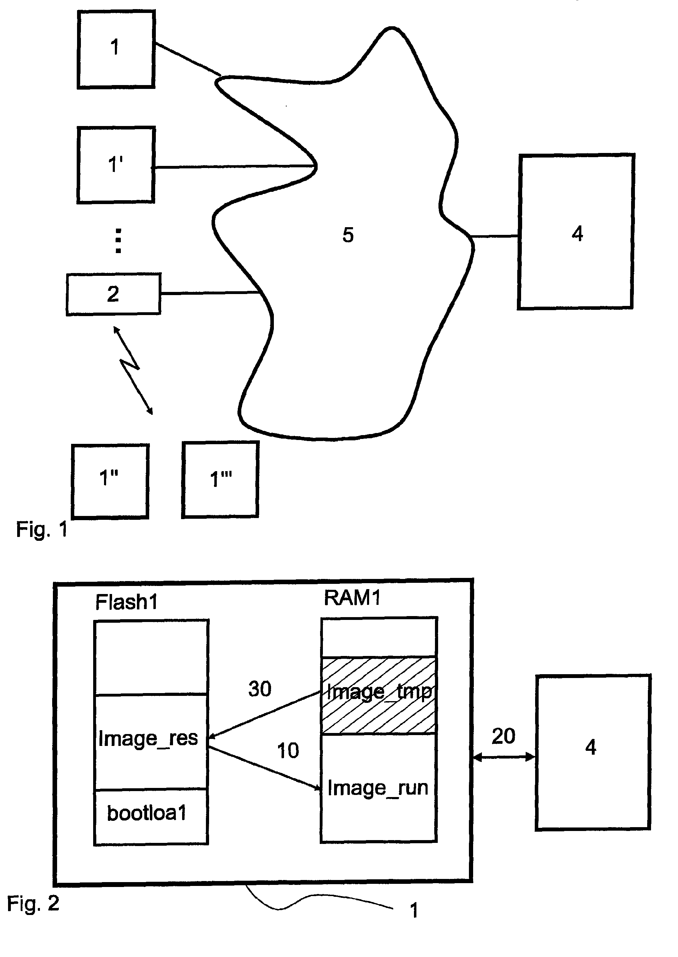

Figur 1 zeigt eine Uebersicht von Geräten 1, 1', .., die über ein Netzwerk 5 mit einem Server 4 verbindbar sind. Das zugrundeliegende Netzwerk 5 kann ein leitungs- oder ein paketvermitteltendes Netzwerk sein. Die einzelnen Geräte 1 usw. können direkt z.B. über ISDN an das Netzwerk 5 angeschlossen sein oder über eine sogenannte Basisstation 2, von der eine bidirektionale Funkverbindung mit einem Gerät 1" etablierbar ist. Diese Funkverbindung kann gemäss dem Standard IEEE 802.11 oder gemäss dem Standard Bluetooth ausgebildet sein. Möglich ist auch, dass mehrere Geräte 1" und 1"' an einer einzigen Basisstation 2 mit dem Netzwerk 5 verbindbar sind. Das Netzwerk 5 seinerseits braucht nicht homogen zu sein, sondern kann z.B. ein Gateway beinhalten, so dass die Geräte 1, 1' usw. z.B. über ISDN anschliessbar sind, jedoch die Verbindung zum Server 4 über das Internet Protokoll TCP/IP hergestellt wird.

Das erfindungsgemässe Verfahren für die Versorgung eines Gerätes mit einer bestimmten Version eines Betriebssystems wird anhand der Figur 2 erläutert. Figur 2 zeigt das Speicherlayout eines Gerätes 1 und ohne Darstellung des Netzwerkes 5 eine Verbindung 20 zu einem Server 4. In einem Lesespeicher Flash1 - auch Flash-Prom-Speicherbaustein genannt - ist in einem Block der sogenannte Bootloader bootloa1 enthalten. Dieses Programm sorgt beim Aufstarten, dass das in anderen Blöcken des Lesespeichers 1 enthaltene residente Betriebssystem Image_res in einer entpackten Form in den Schreiblesespeicher RAM1 mittels eines Transfers 10 kopiert wird. Der vom ablauffähigen Betriebssystem belegte Speicherplatz ist in der Fig. 2 mit image_run bezeichnet. Für das erfindungsgemässe Verfahren ist die gepackte Speicherung des Betriebssystem im Lesespeicher jedoch unerheblich. Nachfolgend werden die verschiedenen Formen des Betriebssystem als "Image" bezeichnet, wobei mit Form die Art der Speicherung bezeichnet ist:

- Komprimiert im Lesespeicher Flash1,
- ablauffähig im Schreiblesespeicher RAM1,
- komprimiert im Schreiblesespeicher RAM1.

Flash-Prom-Speicherbausteine haben eine typische Speicherkapazität von 16 Mbyte aufweist. Sie sind dabei in Blöcke von z.B. 128 kByte organisiert. Ein solcher Block kann gesamthaft gelöscht und mit gegenüber herkömmlichen RAM-Bausteinen deutlich langsameren Schreibzyklen wieder neu beschrieben werden können. Die Speicherkapazität des Schreiblesespeichers RAM1 ist für die Ausführung der vorliegenden Erfindung vorzugsweise mindestens so gross wie jene des Lesespeichers Flash1.

Im Block bootloa ist eine das betreffende Gerät identifizierende Kennung HWId-Rec abgelegt. Die Struktur dieser Kennung Id-Rec ist in Felder gegliedert und beispielhaft der folgenden Tabelle 1 zu entnehmen. Die Grösse der Struktur HWId-Rec beträgt in diesem Beispiel 11 Byte.

Tabelle 1

| HWId-Rec | | |
|---|---|---|
| **Bezeichnung** | **Grösse** | **Inhalt, Bedeutung** |
| Typ | 1 | Art des Gerätes |
| RAM1 | 1 | Ausbaugrösse, Typ |
| Flash1 | 1 | Ausbaugrösse, Typ |
| suppl | 1 | Ausbau, Zusatzkompenente |
| Sep | 1 | Zeichen "-" |
| HW-Vers | 5 | Herkunft des Gerätes und Laufnummer |
| term | 1 | Abschlusszeichen, z.B. 0x00. |

Beispiel einer HWId-Rec: C110-DT002.

Mit dem Zeichen C ist der Geräte Typ gekennzeichnet, mit den beiden nachfolgenden Zeichen 1 ist eine bestimmte Ausbaugrösse und ein bestimmter Typ des Lesespeichers und des Schreiblesespeichers codiert. Im Feld suppl ist mit 0 angegeben, dass keine Zusatzkomponente vorhanden ist. Die Versionsangabe DT002 bezeichnet ein Gerät eines bestimmten Carriers, z.B. Deutsche Telekom AG, und eine Laufnummer, die die Version des Bootloaders und die Hardwarezustandsnummer identifiziert. Das Abschlusszeichen term (term=Termination) ist in der Tabelle in der üblichen hexadezimalen Schreibweise angegeben.

Für die Versorgung eines Gerätes 1 mit einem neuen Betriebssystem bzw. Image ist zusätzlich zur Kennung des Gerätes auch eine Kennung des momentan gespeicherten Image erforderlich. Die Kennung des Image ist beispielhaft der folgenden Tabelle 2 zu entnehmen. Die Grösse der Struktur SWId-Rec beträgt in diesem Beispiel 11 Byte.

Tabelle 2

| SWId-Rec | | |
|---|---|---|
| **Bezeichnung** | **Grösse** | **Inhalt, Bedeutung** |
| orig-Id | 2 | Herkunft des Image |
| sep | 1 | Zeichen "-" |
| lg | 3 | FRA, GER, ENG, ITA, Sprache |
| sep | 1 | Zeichen "-" |
| SW-Vers | 3 | Laufnummer des Image |
| term | 1 | Abschlusszeichen, z.B. 0x00 |

Beispiel einer SWId-Rec: DT-GER-007.

Mit der Zeichenfolge DT ist die Herkunft der Software gekennzeichnet, z.B. Deutsche Telekom. Der Begriff Herkunft ist dabei so zu verstehen, dass es sich um ein Gerät mit einer installierten Software handelt, die an Kunden der Deutschen Telekom AG abgegeben wurde. Da der Speicherplatz auf diesen Gerät zwar beträchtlich ist, jedoch trotzdem in haushälterischer Weise genutzt werden muss, ist insbesondere die Sprache für die Interaktion Mensch/Gerät zwar vorzugsweise in separaten Modulen enthalten, jedoch meist nur für eine einzige Sprache auf dem Gerät speicherbar. Ein Sprachwechsel kann daher ohne Download des entsprechenden Software-Moduls nicht vorgenommen werden. Die Sprache ist im Feld 1g (lg=language) angegeben. Für die Version des Image ist eine dreistellige Laufnummer vorgesehen, möglich ist auch eine andere Gliederung wie z.B. in Versionsstand, Revisionsstand und Paketstand, wobei der Versionsstand für einen bestimmten Leistungsmerkmalsumfang, der Revisionsstand für einen bestimmten Stand der Fehlerkorrektur und der Paketstand für eine bestimmte Ausgabe des betreffenden Software-Moduls steht. Das angegebene Trennzeichen sep (Separator) kann explizit in der Kennung HWId-Rec und/oder SWId-Rec enthalten sein. Möglich ist aber auch, aufgrund einer vorgegebenen Definition der Struktur dieses zeichen nachträglich - insbesondere für eine Darstellung zuhanden einer Person - zur besseren Lesbarkeit einzufügen.

Die Versorgung eines Gerätes mit einem oder mehreren neuen Software-Modulen erfolgt nun mit folgenden Schritten: Von einem Gerät 1 wird durch eine Interaktion einer Person eine Verbindung zu einem Server 4 aufgebaut. Möglich ist auch, dass diese Verbindung automatisch aufgebaut wird, wenn vom Gerät 1 eine Verbindung zu irgend einer Seite des betreffenden Carriers ein Informationsangebot transferiert wird. Dabei wird die das Gerät 1 bedienende Person vorzugsweise zu einem Einverständnis für die Versorgung mit einem neuen Software aufgefordert. Die Art der verwendeten Transportschicht ist unerheblich, vorzugsweise wird eine TCP/IP-Verbindung zu einem Server aufgebaut, als Protokoll wird HTTP verwendet und die Verbindung läuft über einen sogenannten Secure Socket Layer. Die Verwendung eines solchen Secure-Socket-Layers führt zu einem verschlüsselten Datentransfer zwischen Gerät 1 und Server 4. Vom Gerät 1 aus wird über einen HTTPS-Request auf Seite des Servers 4 ein sogenanntes CGI-Script gestartet. Als Parameter wird eine Kennung Id-Rec übermittelt, die gemäss den vorstehenden Erläuterungen aus den Kennungen HWId-Rec und SWId-Rec direkt durch eine sogenannte String-Concatenuation gebildet wird:

$$\text{Id-Rec} := \text{HWId-Rec} + \text{SWId-Rec}.$$

Je nach Art der Realisierung kann die für den Verbindungsaufbau erforderliche Angabe der Adresse des Servers 4 entweder im Gerät 1 selber gespeichert sein, z.B. in der sogenannten Registry oder die Adresse muss vom Benutzer z.B. als URL eingegeben werden oder wie vorstehend erwähnt kann die Adresse auch automatisch von einem weiteren Server des gleichen Carriers übermittelt worden sein.

Auf Seite des Servers 4 wird nun geprüft, ob für die übermittelte Kennung Id-Rec entsprechende Software-Module vorhanden sind und falls ja, ob das Gerät 1 mit der betreffenden Kennung berechtigt ist, neue Software-Module zu empfangen. Aus Gründen der Kundenbindung darf z.B. ein Gerät 1, das von einem anderen Carrier vertrieben wird und dessen Leistungsmerkmalsumfang kleiner ist, nicht zu einem sogenannten Leistungsmerkmalshub über einen anderen Carrier kommen. Der Vorteil dieses Verfahrens liegt darin, dass ohne eine weitere Benutzeridentifikation die Kunden des betreffenden Carriers mit neuer Software versorgt werden können. Die Prüfung der Berechtigung kann z.B. gemäss folgenden zwei Beispielen explizit geprüft werden:

i) Es wird die Angabe der ersten zwei Zeichen im Feld Version-Nr der Struktur HWId-Rec und die Angabe orig-Id der Struktur SWId-Rec geprüft. Dabei müssen erstens die beiden Angaben übereinstimmen, z.B. SC für Swisscom AG, und zweitens muss der Server 4 für den betreffenden Carrier berechtigt sein oder dem Carrier tatsächlich gehören.

ii) Alternativ oder kumulativ kann z.B. das Feld Version-Nr der Kennung HWId-Rec eine Serienummer beinhalten. Auf der Seite des Servers 4 kann aufgrund einer Liste von gespeicherten Serienummern eine Berechtigung festgestellt werden. In diesem Fall kann die Grösse des vorgenannten Feldes HW-Vers entsprechend angepasst; ohne Anpassung lässt sich mit z.B. 2 Byte von 5 Byte immerhin noch ein Nummernvorrat von $2^{16} = 65.536$ realisieren.

Das auf dem Server 4 mittels eines HTTPS-Requests ablaufende Script erzeugt eine sogenannte HTTPS-Response. Diese Response beinhaltet einen Status Code; z.B. 0 für eine erfolgreiche Ausführung und in den Header-Lines ist der Content-Type: text/plain enthalten, der sogenannte Body weist die Struktur <Code> <additional information>; dieser Body hat beispielsweise die in Tabelle 3 enthaltenen Inhalte.

Tabelle 3

| Body | |
|---|---|
| **<code>** | **<additional information>**; Erläuterung |
| 100 | Kein Image für diesen Gerätetyp vorhanden. |
| 110 | Kein Image für diese Serienummer vorhanden. |
| 120 | Aufgrund der Herkunft des Gerätes keine Berechtigung zum Download eines neuen Image. |
| | |
| 300 | Liste der verfügbaren Images: Version-Nr Sprache 007 deutsch 007 französisch 007 italienisch |
| | |
| 900 | Allgemeiner Fehler |

Ist der vorerwähnte Status-Code verschieden von Null, ist ein Fehler aufgetreten, beispielsweise konnte das vorerwähnt Script gar nicht gestartet werden. Wenn ein Image tatsächlich heruntergeladen werden soll bedingt dies einen Status-Code Null. Dabei ist für die entsprechende HTTPS-Response in den Header-Lines der Content-Type: Application/octet-stream sowie content-Length: <bytes> angegeben. Der Body enthält in diesem Fall das binäre Abbild des komprimierten Image. Da die Uebertragung paketweise erfolgt, wird vorzugsweise in einer sogenannten History-Datei der Verlauf der Uebertragung protokolliert, so dass bei Auftreten eines nicht reparierbaren Fehlers auf einer höheren Schicht als auf der Uebertragungsschicht mit einem weiteren Request - siehe dazu die nachfolgenden Erläuterungen zur Fig. 2 - eine bestimmte Sequenz wiederholt und an der entsprechenden Stelle im Schreiblesespeicher RAM1 fortgesetzt werden kann. Insbesondere können in der History Datei die Anfangsadressen von erfolgreich übertragenen Blöcken eingetragen sein.

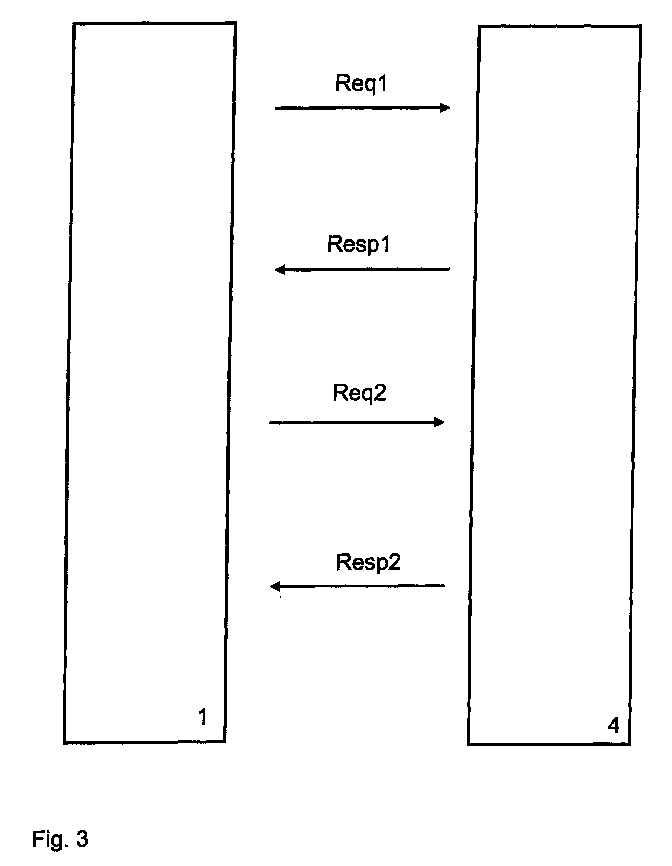

Der Ablauf der Kommunikation ergibt sich gemäss der Darstellung in Figur 3 wie für den vorstehend aufgeführten Fall mit dem Code <code>=300 wie folgt:

Von einem Gerät 1 erfolgt eine Anfrage Req1 Vom Server 4 erfolgt eine Antwort Resp1 mit dem Statuscode=0 und im Body ist eine Textnachricht in der Art gemäss Tabelle 3 mit dem Code <code>=300. Aus der Liste kann die bedienende Person das gewünschte Image auswählen und die Auswahl wird als Anfrage Req2 zum Server 4 übermittelt. Die Antwort Resp4 des Servers 4 beinhaltet nun das angeforderte Image und wird temporär in den Speicher RAM1 des Gerätes 1 übertragen, vgl. Fig. 2. Dieser Ablauf kann auch vorgesehen sein, wenn nur ein einziges Image vorhanden ist. Dies ist durchaus zweckmässig, um für das Herunterladen eines Image ein explizites Einverständnis des betreffenden Benutzers zu erreichen.

Das vom Server 4 zu einem Gerät 1 transferierte Image wird im Schreiblesespeicher RAM1 zwischengespeichert, siehe dazu den Speicherbereich Image_tmp gemäss der Fig. 2. Nach erfolgter vollständiger Uebertragung wird entweder durch eine erforderliche Benutzeraktion oder automatisch der Inhalt des vorerwähnten Speicherbereichs blockweise in den Lesepeicher Flash1 zurückgeschrieben, dies ist in Figur 2 mit dem Transfer 30 dargestellt. Die Ausführung der Uebertragung erfolgt vorzugsweise durch ein Dienstprogramm des Bootloaders.

Auf der Seite des Servers 4 muss nicht nur die Bereitstellung der Software-Module selber vorgekehrt werden. Insbesondere muss mit einem sogenannten Administrationstool wenigstens eine Datenbank angelegt werden und bestimmte Inhalte müssen vordefiniert werden. Je nach Anwendung sind beispielsweise die Daten der Kunden zu speichern, die potentiell die Dienste der Software-Versorgung in Anspruch nehmen. Ebenso können beispielsweise die vorstehend genannten Serienummernberiche der zugelassenen Geräte 1 in einer Datenbank gespeichert werden. Dadurch ist erst einmal primär die Berechtigungsprüfung möglich. Im weiteren kann es erforderlich sein, zu jeder durchgeführten Versorgung eines Gerätes 1 einen History-Eintrag zu generieren und in der wenigstens einen Datenbank zu speichern. Ein solcher History-Eintrag enthält wenigstens die einem Gerät zugehörige Kennung HWId-Red; vorzugsweise werden weitere Informationen abgelegt, z.B. Datum/Uhrzeit der Interaktion und Art der übermittelten Software-Module oder der Grund, weshalb die Uebermittlung der Software-Module verweigert werden musste oder nicht möglich war. Diese History-Einträge dienen als Basis für allfällig zukünftig durchzuführende Prüfungen der Berechtigung. Dadurch wird die Sicherheit hinsichtlich eines Missbrauches wie auch hinsichtlich des Betriebs eines solchen Gerätes erhöht. Zum letzteren können damit Abhängigkeit der verschiedenen Stände und/oder Versionen/Revisionen der Software-Module in differenzierter Weise berücksichtigt werden.

Die in Fig. 3 dargestellte Ablaufsequenz Req1, Resp1, Req2, Resp2 kann auch vorgesehen werden, dass zusätzlich die betreffende Person aufgrund einer vorgängig erfolgten Registrierung ihre sogenannte Benutzerkennung und ein Passwort eingeben muss und erst im Anschluss daran erfolgt ein Download eines neuen Image. Es können in einer weiteren Ausführungsform der Erfindung weitere Interaktionen Req/Resp sooft iteriert werden, bis tatsächlich alle Informationen für die Feststellung der Berechtigung vorhanden sind und abhängig vom Ergebnis der Berechtigungsprüfung anschliessend ein Download eines neuen Image erfolgt. Die zusätzliche Feststellung der Identität einer Person ist dann vorzusehen, wenn ein solcher Download mit einer Kostenfolge verbunden sein soll.

Weitere Interaktionen Req/Resp können auch automatisch generiert werden, beispielsweise um bei einem aufgetretenen Fehler ab einer bestimmten Stelle gemäss den Angaben in der History-Datei eine Uebertragung von Software-Modulen fortzusetzen.

Das erfindungsgemässe Verfahren zur Versorgung mit Software-Modulen ist nicht auf die eingangs genannten Geräte beschränkt, sondern kann auch für Systeme und Datenverarbeitungsanlagen eingesetzt werden, bei denen strenge Anforderungen hinsichtlich Kompatibilität von neuen Software-Modulen zur zugehörigen Hardware und/oder zu bereits installierten Software-Modulen zu erfüllen sind.

Liste der verwendeten Bezugszeichen und Abkürzungen

1, 1', 1'', ..     Informations- und Kommunikationsgerät, Gerät

2               Basisstation zu einem Informations- und Kommunikationsgerät.

| | |
|---|---|
| 4 | Server |
| 5 | Netzwerk |
| 10 | Vom Bootloader expandiertes und in den Schreiblesespeicher transferiertes Betriebssystem |
| 20 | Datenverbindung zwischen Gerät und Server |
| 30 | Zurückschreiben einer geänderten Version des Betriebssystems |
| bootloa1 | Bootloader, Aufstartprogramm |
| CGI | Common Gateway Interface |
| Flash1 | Flash-Prom-Lesespeicher |
| HTTP | hypertexttransferprotocol |
| HTTPS | hypertexttransferprotocol secure |
| IEEE | The Institut of Electrical and Electronics Engineers |
| Image_res | im Lesespeicher residentes Betriebssystem |
| Image_run | im Schreiblesespeicher gespeichertes, ablauffähiges Betriebssystem |
| Image_tmp | im Schreiblesespeicher zwischengespeichertes Betriebssystem |
| IP | Internet Protocol |
| ISDN | Integrated Services Digital Network |
| lg | Language |
| RAM1 | Schreiblesespeicher |
| Req | Request |
| Resp | Response |
| suppl | Supplement |
| term | Termination |
| URL | Uniform Resource Locater |

**Patentansprüche**

1. Verfahren zur Versorgung eines Gerätes (1) mit einem Software-Modul (image_tmp, image), wobei das Gerät (1) einen Prozessor und einen Speicher (Flash1, RAM1) enthält, der in einen flüchtigen Schreiblesespeicher (RAM1) und einen nichtflüchtigen Lesespeicher (Flash1) gegliedert ist und wobei das Gerät (1) über ein Netzwerk (5) mit einem Server (4) für einen Datentransfer (20) verbindbar ist,
**gekennzeichnet durch** die Verfahrensschritte:

   A eine wenigstens das Gerät (1) identifizierende Kennung (Id-Rec) wird vom Gerät (1) an den Server (4) übermittelt;
   B Im Server (4) wird geprüft, ob zur übermittelten Kennung (Id-Rec) ein korrespondierendes Software-Modul (image_tmp) vorhanden ist und ob für die Kennung (Id-Rec) eine Berechtigung vorhanden ist, ein Software-Modul (image_tmp) zu übermitteln;

C abhängig vom Ergebnis der Prüfung im Verfahrensschritt B wird entweder das korrespondierende Software-Modul (image_tmp) oder eine Meldung übermittelt und im Speicher (Flash1, RAM1) des Gerätes (1) gespeichert, wobei die Uebermittlung in den Verfahrensschritten A und C verschlüsselt ist.

2. Verfahren nach Anspruch 1,
   **dadurch gekennzeichnet, dass**
   die im Verfahrensschritt A übermittelte Kennung (Id-Rec) Angaben enthält
   über das Gerät (1) :

   - Ausbau (RAM1, Flash1, suppl) des Gerätes (1);
   - Herkunft (HW-Vers) des Gerätes (1);

   und/oder über die auf dem Gerät (1) installiertes Software-Module (Image_res):

   - auf dem Gerät (1) installierte Sprache (1g);
   - Herkunft (orig-Id) und/oder Laufnummer (SW-Vers) eines momentan auf dem Gerät (1) installiertes Software-Moduls (image_res).

3. Verfahren nach Anspruch 2,
   **dadurch gekennzeichnet, dass**
   im Verfahrensschritt B die Berechtigung aufgrund der Herkunft des Gerätes (1) und/oder der Herkunft des Software-Moduls (Image_res) geprüft wird.

4. Verfahren nach einem der Ansprüche 1 bis 3,
   **dadurch gekennzeichnet, dass**
   im Verfahrensschritt B die Berechtigung aufgrund einer vorgängig gespeicherten Benutzeridentität geprüft wird.

5. Verfahren nach einem der Ansprüche 1 bis 4,
   **dadurch gekennzeichnet, dass**
   im Verfahrensschritt C die gesicherte Uebertragung mittels des Protokolls https erfolgt.

6. Verfahren nach einem der Ansprüche 1 bis 5,
   **dadurch gekennzeichnet, dass**
   die Verfahrensschritte A und B sooft iteriert werden, bis alle Informationen zur Ausführung des Verfahrensschrittes C vorhanden sind.

7. Verfahren nach einem der Ansprüche 1 bis 6,
   **dadurch gekennzeichnet, dass**
   im Verfahrensschritte B im Server (4) wenigstens eine Datenbank vorhanden ist, deren Einträge für die Prüfung der Berechtigung benutzt werden, wobei die von einem Gerät (1) übermittelte Kennung (Id-Rec) für eine zukünftige Prüfung der Berechtigung in der wenigstens einen Datenbank gespeichert wird.

8. System zur Durchführung eines Verfahren zur Versorgung eines Gerätes (1) mit einem Software-Modul (image_tmp, image_res), wobei das System wenigstens ein Gerät (1) umfasst, dass über ein Netzwerk (5) mit einem Server (4) verbindbar ist,
   **dadurch gekennzeichnet, dass**
   das System Mittel aufweist, um die Verfahrensschritte A, B und C gemäss einem der Ansprüche 1 bis 7 durchzuführen.

Fig. 1

Fig. 2

Req1

Resp1

Req2

Resp2

1

4

Fig. 3

**Europäisches Patentamt**

# EUROPÄISCHER RECHERCHENBERICHT

Nummer der Anmeldung

EP 01 12 5772

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | US 5 867 714 A (TERRELL MICHAEL R ET AL) 2. Februar 1999 (1999-02-02) * Anspruch 15 * * Spalte 7-11 * --- | 1-8 | G06F9/445 H04Q7/32 |
| Y | EP 1 113 359 A (NOKIA MOBILE PHONES LTD) 4. Juli 2001 (2001-07-04) * Ansprüche 1,2 * * Spalte 6, Zeile 7,8 * --- | 1-8 | |
| Y | GB 2 357 865 A (NIPPON ELECTRIC CO) 4. Juli 2001 (2001-07-04) * Zusammenfassung * --- | 1-8 | |
| Y | US 6 223 287 B1 (EDELMAN STEWART J ET AL) 24. April 2001 (2001-04-24) * Zusammenfassung * ----- | 5 | |

**RECHERCHIERTE SACHGEBIETE (Int.Cl.7)**

G06F
H04Q

Der vorliegende Recherchenbericht wurde für alle Patentansprüche erstellt

| Recherchenort | Abschlußdatum der Recherche | Prüfer |
|---|---|---|
| MÜNCHEN | 10. Mai 2002 | Krischer, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 01 12 5772

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-05-2002

| Im Recherchenbericht angeführtes Patentdokument | | Datum der Veröffentlichung | Mitglied(er) der Patentfamilie | | Datum der Veröffentlichung |
|---|---|---|---|---|---|
| US 5867714 | A | 02-02-1999 | KEINE | | |
| EP 1113359 | A | 04-07-2001 | EP | 1113359 A2 | 04-07-2001 |
| GB 2357865 | A | 04-07-2001 | JP | 2001051851 A | 23-02-2001 |
| US 6223287 | B1 | 24-04-2001 | KEINE | | |

EPO FORM P0461

Für nähere Einzelheiten zu diesem Anhang : siehe Amtsblatt des Europäischen Patentamts, Nr. 12/82